(19) Europäisches Patentamt
European Patent Office
Office européen des brevets

(11) **EP 4 191 731 A1**

(12) **EUROPEAN PATENT APPLICATION**
published in accordance with Art. 153(4) EPC

(43) Date of publication:
**07.06.2023 Bulletin 2023/23**

(21) Application number: **21853581.3**

(22) Date of filing: **14.06.2021**

(51) International Patent Classification (IPC):
$H01M\ 10/36$ (2010.01)   $H01M\ 4/505$ (2010.01)
$H01M\ 4/525$ (2010.01)   $H01M\ 4/587$ (2010.01)

(52) Cooperative Patent Classification (CPC):
**H01M 4/505; H01M 4/525; H01M 4/587;**
**H01M 10/36;** Y02E 60/10

(86) International application number:
**PCT/JP2021/022506**

(87) International publication number:
**WO 2022/030109 (10.02.2022 Gazette 2022/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.08.2020 JP 2020132020**

(71) Applicant: **Panasonic Intellectual Property
Management Co., Ltd.
Osaka-shi, Osaka 540-6207 (JP)**

(72) Inventors:
• **IIDA, Kazuhiro
Osaka-shi, Osaka 540-6207 (JP)**
• **TAKEUCHI, Masanobu
Osaka-shi, Osaka 540-6207 (JP)**

(74) Representative: **Novagraaf International SA
Chemin de l'Echo 3
1213 Onex, Geneva (CH)**

(54) **LITHIUM ION SECONDARY BATTERY**

(57)   This lithium ion secondary battery includes: a negative electrode; a positive electrode; a non-aqueous electrolyte which is water repellant and contains a lithium salt; and an aqueous solid electrolyte which contains a lithium salt. The aqueous solid electrolyte contacts only the positive electrode, from between the negative electrode and the positive electrode. The non-aqueous electrolyte contacts at least the negative electrode, from between the negative electrode and the positive electrode.

Figure 1

**Description**

TECHNICAL FIELD

The present disclosure relates to a lithium ion secondary battery.

BACKGROUND

As secondary batteries with a high output and a high energy density, lithium ion secondary batteries are widely used that include a positive electrode, a negative electrode, and an electrolyte liquid and perform charge and discharge by allowing lithium ions to travel between the positive electrode and the negative electrode. In the conventional secondary batteries, an organic solvent-based electrolyte liquid is used for achieving the high energy density.

However, organic solvents are generally flammable, and have an important problem of ensuring safety. In addition, organic solvents have a lower ion conductivity than aqueous solutions, and have a problem that the rapid charge-discharge characteristics are insufficient.

In view of such problems, a secondary battery has been studied in which an aqueous electrolyte containing water is used. For example, Patent Literature 1 proposes a lithium ion secondary battery in which an aqueous solution containing a high-concentration alkali salt is used as an aqueous liquid electrolyte. Patent Literature 2 proposes a lithium ion secondary battery including a negative electrode filled with a non-aqueous solid electrolyte, a positive electrode, a separator disposed between the negative electrode and the positive electrode and filled with a non-aqueous solid electrolyte, and an aqueous liquid electrolyte.

CITATION LIST

PATENT LITERATURE

Patent Literature 1: JP 6423453 B
Patent Literature 2: JP 2018-198131 A

SUMMARY

The conventional lithium ion secondary batteries having an aqueous electrolyte have a problem of low initial charge-discharge efficiency.

Therefore, an object of the present disclosure is to provide a lithium ion secondary battery in which the initial charge-discharge efficiency can be improved while an aqueous electrolyte is used.

An aspect of the present disclosure is a lithium ion secondary battery including a negative electrode, a positive electrode, a non-aqueous electrolyte including a lithium salt and having water repellency, and an aqueous solid electrolyte including a lithium salt, wherein the aqueous solid electrolyte is in contact with only the positive electrode between the negative electrode and the positive electrode, and the non-aqueous electrolyte is in contact with at least the negative electrode between the negative electrode and the positive electrode.

According to the present disclosure, a lithium ion secondary battery can be provided in which the initial charge-discharge efficiency can be improved.

BRIEF DESCRIPTION OF DRAWING(S)

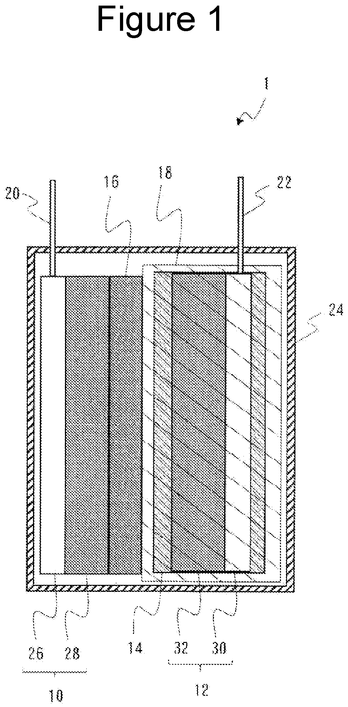

FIG. 1 is a schematic sectional view showing an example of a lithium ion secondary battery of the present embodiment.

DESCRIPTION OF EMBODIMENTS

A lithium ion secondary battery of an aspect of the present disclosure includes a negative electrode, a positive electrode, a non-aqueous electrolyte including a lithium salt and having water repellency, and an aqueous solid electrolyte including a lithium salt, and the aqueous solid electrolyte is in contact with only the positive electrode between the negative electrode and the positive electrode, and the non-aqueous electrolyte is in contact with at least the negative electrode between the negative electrode and the positive electrode. Using the lithium ion secondary battery of an aspect of the present disclosure can improve the initial charge-discharge efficiency. Although the mechanism of exerting the effect is not sufficiently clear, the following is presumed.

In a lithium ion secondary battery using an aqueous electrolyte containing water, reductive decomposition of the water in the aqueous electrolyte (that is, a side reaction) is generally performed on the negative electrode, and thus progress of a charge reaction at the negative electrode is inhibited, and the initial charge-discharge efficiency deteriorates. However, in the present disclosure, the aqueous solid electrolyte is used as an aqueous electrolyte, and the positive electrode is, for example, coated with the aqueous solid electrolyte and the aqueous solid electrolyte is in contact with only the positive electrode, and thus water can be prevented from moving toward the negative electrode side as compared with the case of using an aqueous liquid electrolyte. Furthermore, the non-aqueous electrolyte having water repellency is in contact with the negative electrode, and therefore even if water moves toward the negative electrode side, the non-aqueous electrolyte having water repellency prevents water from being in contact with the negative electrode surface. As a result, a side reaction of water at the negative electrode is suppressed, and thus a charge-discharge reaction at the negative electrode proceeds, and the initial charge-discharge efficiency can be improved.

Hereinafter, an example of an embodiment of the lithium ion secondary battery according to the present disclosure will be described in detail.

FIG. 1 is a schematic sectional view showing an example of the lithium ion secondary battery of the present embodiment. A lithium ion secondary battery 1 shown in FIG. 1 includes a positive electrode 10, a negative electrode 12, a separator 14, an aqueous solid electrolyte 16, a non-aqueous electrolyte 18 having water repellency, a positive electrode lead 20, a negative electrode lead 22, and a battery case 24 housing these components. The positive electrode 10 is coated with the aqueous solid electrolyte 16, and the aqueous solid electrolyte 16 is in contact with only the positive electrode 10 between the positive electrode 10 and the negative electrode 12. The separator 14 is wound around the negative electrode 12. The negative electrode 12 and the separator 14 is coated with the non-aqueous electrolyte 18 having water repellency, and the non-aqueous electrolyte 18 is in contact with the negative electrode 12 and the separator 14. In FIG. 1, the non-aqueous electrolyte 18 having water repellency is in contact with only the negative electrode 12 between the positive electrode 10 and the negative electrode 12, but may be in contact with both the positive electrode 10 and the negative electrode 12.

The positive electrode 10 includes a positive electrode current collector 26 and a positive electrode mixture layer 28 disposed on the positive electrode current collector 26. A positive electrode lead 20 is connected to the positive electrode current collector 26. The positive electrode lead 20 is housed in the battery case 24 so that the tip of the positive electrode lead 20 protrudes to the outside of the battery case 24.

As the positive electrode current collector 26, for example, a foil of a metal electrochemically and chemically stable within the potential range of the positive electrode 10 or a film having such a metal disposed on its surface layer can be used. The form of the positive electrode current collector 26 is not particularly limited. For example, a porous body of the metal, such as a mesh, a punching sheet, or an expanded metal, may be used. Examples of a material of the positive electrode current collector 26 include stainless steel, Al, an aluminum alloy, and Ti. The positive electrode current collector 26 preferably has a thickness of, for example, 3 $\mu$m or more and 50 $\mu$m or less from the viewpoints of current collectability, mechanical strength, and the like.

The positive electrode mixture layer 28 includes a positive electrode active material. The positive electrode mixture layer 28 may include a binder, a conductive agent, and the like. The positive electrode 10 can be manufactured by, for example, applying a positive electrode mixture slurry including a positive electrode active material, a binder, a conductive agent, and the like to the positive electrode current collector 26, and drying and rolling the applied film to form a positive electrode mixture layer 28 on the positive electrode current collector 26.

Examples of the positive electrode active material include lithium-containing transition metal oxides containing lithium (Li) and a transition metal element such as cobalt (Co), manganese (Mn), or nickel (Ni). In addition, examples of the positive electrode active material include transition metal sulfides, metal oxides, lithium-containing polyanion-based compounds containing one or more transition metals such as lithium iron phosphate ($LiFePO_4$) and lithium iron pyro-phosphate ($Li_2FeP_2O_7$), a sulfur-based compound ($Li_2S$), oxygen, and oxygen-containing metal salts such as lithium oxide. As the positive electrode active material, a lithium-containing transition metal oxide is preferable, for example, from the viewpoint of charge-discharge efficiency.

The lithium-containing transition metal oxide preferably contains at least one element of Ni, Co, Mn, or aluminum (Al), for example, from the viewpoints of charge-discharge efficiency and the like. Among these elements, at least a Ni element, at least a Co element, at least two elements of Ni and Mn, at least three elements of Ni, Co, and Mn, or at least three elements of Ni, Co, and Al are preferably contained. The lithium-containing transition metal oxide may contain an additional element other than these elements, and for example, may contain zirconium (Zr), boron (B), magnesium (Mg), scandium (Sc), yttrium (Y), titanium (Ti), iron (Fe), copper (Cu), zinc (Zn), chromium (Cr), lead (Pb), tin (Sn), sodium (Na), potassium (K), barium (Ba), strontium (Sr), calcium (Ca), tungsten (W), molybdenum (Mo), niobium (Nb), and silicon (Si).

Specific examples of the lithium-containing transition metal oxide include $Li_xCoO_2$, $Li_xNiO_2$, $Li_xMnO_2$, $Li_xCo_yNi_{1-y}O_2$, $Li_xCo_yM_{1-y}O_z$, $Li_xNi_{1-y}M_yO_z$, $Li_xMn_2O_4$, $Li_xMn_{2-y}M_yO_4$, $LiMPO_4$, and $Li_2MPO_4F$ (in each chemical formula, M is at least one of Na, Mg, Sc, Y, Mn, Fe, Co, Ni, Cu, Zn, Al, Cr, Pb, Sb, or B, $0 < x \leq 1.2$, $0 < y \leq 0.9$, and $2.0 \leq z \leq 2.3$). The lithium-containing transition metal oxides may be used singly or in combination of two or more kinds thereof. The lithium-containing transition metal oxide preferably contains 80 mol% or more of Ni based on the total amount of the transition metals other than lithium from the viewpoint of increasing the capacity. From the viewpoint of stability of the crystal structure, the lithium-containing transition metal oxide is more preferably $Li_aNi_bCo_cAl_dO_2$ ($0 < a \leq 1.2$, $0.8 \leq b < 1$, $0 < c < 0.2$, $0 < d \leq 0.1$, and $b + c + d = 1$).

The lithium-containing transition metal oxide may be a Li-rich transition metal oxide, a lithium-containing transition metal halogen oxide, or the like. The Li-rich transition metal oxide is represented by, for example, the general formula $Li_{1+x}Me_{1-x}O_2$ ($0 < x$). The lithium-containing transition metal halogen oxide is not particularly limited as long as it is a lithium-containing transition metal oxide containing a halogen atom, but a lithium-containing transition metal oxide containing a fluorine atom is preferably included, for example, from the viewpoints of structural stability of the lithium-containing transition metal oxide, and the like.

As the conductive agent, a known conductive agent can be used that enhances the electroconductivity of the positive electrode mixture layer 28, and examples of the conductive agent include carbon materials such as carbon black, acetylene black, Ketjenblack, graphite, carbon nanofibers, carbon nanotubes, and graphene. As the binder, a known binder can be used that maintains good contact states of the positive electrode active material and the conductive agent and enhances the adhesiveness of the positive electrode active material and the like to the surface of the positive electrode current collector 26, and examples of the binder include fluororesins such as polytetrafluoroethylene (PTFE) and polyvinylidene fluoride (PVDF), polyacrylonitrile (PAN), polyimides, acrylic resins, polyolefins, carboxymethyl celluloses (CMCs) and salts thereof, styrene-butadiene rubber (SBR), polyethylene oxide (PEO), polyvinyl alcohol (PVA), and polyvinylpyrrolidone (PVP).

The negative electrode 12 includes a negative electrode current collector 30 and a negative electrode mixture layer 32 disposed on the negative electrode current collector 30. A negative electrode lead 22 is connected to the negative electrode current collector 30. The negative electrode lead 22 is housed in the battery case 24 so that the tip of the negative electrode lead 22 protrudes to the outside of the battery case 24.

As the negative electrode current collector 30, for example, a foil of a metal electrochemically and chemically stable within the potential range of the negative electrode 12 or a film having such a metal disposed on its surface layer can be used. The form of the negative electrode current collector 30 is not particularly limited. For example, a porous body of the metal, such as a mesh, a punching sheet, or an expanded metal, may be used. Examples of a material of the negative electrode current collector 30 include Al, Ti, Mg, Zn, Pb, Sn, Zr, and In. These metals may be used singly, or may be used as an alloy or the like of two or more kinds thereof, and the material of the negative electrode current collector 30 is to include at least one such metal as a main component. In the case of including two or more elements, the material is not necessarily required to be alloyed. The negative electrode current collector 30 preferably has a thickness of, for example, 3 $\mu$m or more and 50 $\mu$m or less from the viewpoints of current collectability, mechanical strength, and the like.

The negative electrode mixture layer 32 includes a negative electrode active material. The negative electrode mixture layer 32 may include a binder, a conductive agent, and the like. As the conductive agent and the binder, ones similar to those on the positive electrode 10 side can be used. The negative electrode 12 can be manufactured by, for example, applying a negative electrode mixture slurry including a negative electrode active material, a binder, a conductive agent, and the like to the negative electrode current collector 30, and drying and rolling the applied film to form a negative electrode mixture layer 32 on the negative electrode current collector 30.

The negative electrode active material is not particularly limited as long as it is a material that can be used as a negative electrode active material of a conventional lithium ion secondary battery, and examples of the material include carbon materials such as artificial graphite, natural graphite, hard carbon, soft carbon, carbon nanotubes, and activated carbon, metals such as Li, Si, and Sn, alloys and oxides of such metals, and metal compounds such as metal sulfides and metal nitrides. Examples of the Li alloys include a lithium-aluminum alloy, a lithium-tin alloy, a lithium-lead alloy, and a lithium-silicon alloy. Examples of the metal oxides including Li include lithium titanate (such as $Li_4Ti_5O_{12}$). Examples of the metal nitrides including Li include lithium-cobalt nitrides, lithium-iron nitrides, and lithium-manganese nitrides. Sulfur-based compounds may also be exemplified.

In a lithium ion secondary battery using an aqueous electrolyte and using a carbon material as a negative electrode active material, the influence of a side reaction of water is usually so large that the initial charge-discharge efficiency remarkably deteriorates. However, according to the lithium ion secondary battery of the present embodiment, water is prevented from being in contact with the negative electrode, and therefore even if a carbon material is used as the negative electrode active material, the initial charge-discharge efficiency can be improved.

The aqueous solid electrolyte 16 including a lithium salt is, for example, a solid electrolyte in which a lithium salt, an aqueous solvent, and a matrix polymer are combined. The aqueous solid electrolyte 16 is obtained by, for example, dissolving a lithium salt in an aqueous solvent, further mixing or dissolving a matrix polymer to obtain a precursor solution, and drying the precursor solution.

The aqueous solvent is a solvent containing water, and may be water alone, or may contain water and a solvent other than water. The content of water based on the total amount of the aqueous solvent is preferably 50% or more in terms of volume ratio, for example, from the viewpoints of enhancing the safety of the lithium ion secondary battery, and the like.

The amount of water with respect to the lithium salt included in the aqueous solid electrolyte 16 is such that the molar ratio of the lithium salt to water is preferably 1 : 4 or less, more preferably in the range of 1 : 0.5 to 1 : 4, and still more preferably in the range of 1 : 0.5 to 1 : 3 mol. In a case where the amount of water with respect to the lithium salt included in the aqueous solid electrolyte 16 is within the above range, for example, the potential window of the aqueous solid electrolyte 16 may be enlarged as compared with the case of the water amount out of the above range, and the voltage applied to the lithium ion secondary battery 1 may be further increased.

Examples of the solvent other than water contained in the aqueous solvent include organic solvents such as esters, ethers, nitriles, alcohols, ketones, amines, amides, sulfur compounds, and hydrocarbons. Examples of the solvent other than water contained in the aqueous solvent may further include halogen-substituted solvents in which at least a part of hydrogen atoms in the above-described solvents are substituted with halogen atoms such as fluorine. Specifically, organic carbonates are preferable from the viewpoint of, for example, improving the battery characteristics of the lithium ion secondary battery, and examples of the organic carbonates include cyclic organic carbonates such as ethylene carbonate, propylene carbonate, vinylidene carbonate, and butylene carbonate, chain organic carbonates such as dimethyl carbonate, methyl ethyl carbonate, and diethyl carbonate, and fluorinated organic carbonates including fluorine as a constitution element such as fluoroethylene carbonate, fluorodimethyl carbonate, and methyl fluoropropionate. Among the above examples, the cyclic organic carbonates and the fluorinated organic carbonates including fluorine as a constitution element are particularly preferable, for example, from the viewpoints of suppressing self-discharge of the battery, and the like. Among the fluorinated organic carbonates in the above examples, fluoroethylene carbonate is preferable. These organic solvents may be used singly or in combination of two or more kinds thereof.

The amount of the organic carbonate with respect to the lithium salt included in the aqueous solid electrolyte 16 is such that the molar ratio of the lithium salt to the organic carbonate is preferably in the range of 1 : 0.01 to 1 : 2.5, and more preferably in the range of 1 : 0.05 to 1 : 2. In a case where the amount of the organic carbonate with respect to the lithium salt is within the above range, the battery characteristics of the lithium ion secondary battery may be improved as compared with the case of the organic carbonate amount out of the above range.

As the lithium salt, any compound can be used as long as it is dissolved and dissociated in an aqueous solvent to provide lithium ions in the aqueous solid electrolyte 16. Examples of such a lithium salt include salts with an inorganic acid such as perchloric acid, sulfuric acid, or nitric acid, salts with a halide ion such as a chloride ion or a bromide ion, and salts with an organic anion including a carbon atom in its structure.

Examples of the organic anion constituting the lithium salt include anions represented by the following general formulas (i) to (vi).

$$(R^1SO_2)(R^2SO_2)N^- \qquad (i)$$

($R^1$ and $R^2$ are each independently selected from an alkyl group or a halogen-substituted alkyl group. $R^1$ and $R^2$ may be bonded to each other to form a ring.)

$$R^3SO_3^- \qquad (ii)$$

($R^3$ is selected from an alkyl group or a halogen-substituted alkyl group.)

$$R^4CO_2^- \qquad (iii)$$

($R^4$ is selected from an alkyl group or a halogen-substituted alkyl group.)

$$(R^5SO_2)_3C^- \qquad (iv)$$

($R^5$ is selected from an alkyl group or a halogen-substituted alkyl group.)

$$[(R^6SO_2)N(SO_2)N(R^7SO_2)]^{2-} \qquad (v)$$

($R^6$ and $R^7$ are selected from an alkyl group or a halogen-substituted alkyl group.)

$$[(R^8SO_2)N(CO)N(R^9SO_2)]^{2-} \qquad (vi)$$

($R^8$ and $R^9$ are selected from an alkyl group or a halogen-substituted alkyl group.)

In the general formulas (i) to (vi), the number of carbon atoms in the alkyl group or the halogen-substituted alkyl group is preferably 1 to 6, more preferably 1 to 3, and still more preferably 1 to 2. The halogen in the halogen-substituted alkyl group is preferably fluorine. The substitution number of the halogen in the halogen-substituted alkyl group is equal to or smaller than the number of hydrogen atoms in the original alkyl group.

Each of $R^1$ to $R^9$ is, for example, a group represented by the following general formula (vii).

$$C_nH_aF_bCl_cBr_dI_e \qquad (vii)$$

(n is an integer of 1 or more, a, b, c, d, and e are integers of 0 or more, and $2n + 1 = a + b + c + d + e$ is satisfied.)

Specific examples of the organic anion represented by the general formula (i) include bis(trifluoromethanesulfonyl)imide (TFSI; $[N(CF_3SO_2)_2]^-$), bis(perfluoroethanesulfonyl)imide (BETI; $[N(C_2F_5SO_2)_2]^-$), and (perfluoroethanesulfonyl)(trifluoromethanesulfonyl)imide ($[N(C_2F_5SO_2)(CF_3SO_2)]^-$). Specific examples of the organic anion represented by the general formula (ii) include $CF_3SO_3^-$ and $C_2F_5SO_3^-$. Specific examples of the organic anion represented by the general formula (iii) include $CF_3CO_2^-$ and $C_2F_5CO_2^-$. Specific examples of the organic anion represented by the general formula (iv) include tris(trifluoromethanesulfonyl)carbon acid ($[(CF_3SO_2)_3C]^-$) and tris(perfluoroethanesulfonyl)carbon acid ($[(C_2F_5SO_2)_3C]^-$). Specific examples of the organic anion represented by the general formula (v) include sulfonyl bis(trifluoromethanesulfonyl)imide ($[(CF_3SO_2)N(SO_2)N(CF_3SO_2)]^{2-}$), sulfonyl bis(perfluoroethanesulfonyl)imide ($[(C_2F_5SO_2)N(SO_2)N(C_2F_5SO_2)]^{2-}$), and sulfonyl (perfluoroethanesulfonyl)(trifluoromethanesulfonyl)imide ($[(C_2F_5SO_2)N(SO_2)N(CF_3SO_2)]^{2-}$). Specific examples of the organic anion represented by the general formula (vi) include carbonyl bis(trifluoromethanesulfonyl)imide ($[(CF_3SO_2)N(CO)N(CF_3SO_2)]^{2-}$), carbonyl bis(perfluoroethanesulfonyl)imide ($[(C_2F_5SO_2)N(CO)N(C_2F_5SO_2)]^{2-}$), and carbonyl (perfluoroethanesulfonyl)(trifluoromethanesulfonyl)imide ($[(C_2F_5SO_2)N(CO)N(CF_3SO_2)]^{2-}$).

Examples of organic anions other than the organic anions of the general formulas (i) to (vi) include anions such as bis(1,2-benzenediolate(2-)-O,O')borate, bis(2,3-naphthalenediolate(2-)-O,O')borate, bis(2,2'-biphenyldiolate(2-)-O,O')borate, and bis(5-fluoro-2-ol ate-1-b enzene sulfonate-O, O')b orate.

The anion constituting the lithium salt is preferably an imide anion. Specific examples of a preferable imide anion include, in addition to the imide anions exemplified as the organic anions represented by the general formula (i), bis(fluorosulfonyl)imide (FSI; $[N(FSO_2)_2]^-$) and (fluorosulfonyl)(trifluoromethanesulfonyl)imide (FTI; $[N(FSO_2)(CF_3SO_2)]^-$).

The lithium salt having a lithium ion and an imide anion is, for example, preferably lithium bis(trifluoromethanesulfonyl)imide (LiTFSI), lithium bis(perfluoroethanesulfonyl)imide (LiBETI), lithium (perfluoroethanesulfonyl)(trifluoromethanesulfonyl)imide, lithium bis(fluorosulfonyl)imide (LiFSI), or lithium (fluorosulfonyl)(trifluoromethanesulfonyl)imide (LiFTI), and more preferably lithium bis(trifluoromethanesulfonyl)imide (LiTFSI), from the viewpoint of, for example, effectively suppressing self-discharge of the battery. These lithium salts may be used singly or in combination of two or more kinds thereof.

Specific examples of other lithium salts include $CF_3SO_3Li$, $C_2F_5SO_3Li$, $CF_3CO_2Li$, $C_2F_5CO_2Li$, $(CF_3SO_2)_3CLi$, $(C_2F_5SO_2)_3CLi$, $(C_2F_5SO_2)_2(CF_3SO_2)CLi$, $(C_2F_5SO_2)(CF_3SO_2)_2CLi$, $[(CF_3SO_2)N(SO_2)N(CF_3SO_2)]Li_2$, $[(C_2F_5SO_2)N(SO_2)N(C_2F_5SO_2)]Li_2$, $[(C_2F_5SO_2)N(SO_2)N(CF_3SO_2)]Li_2$, $[(CF_3SO_2)N(CO)N(CF_3SO_2)]Li_2$, $[(C_2F_5SO_2)N(CO)N(C_2F_5SO_2)]Li_2$, $[(C_2F_5SO_2)N(CO)N(CF_3SO_2)]Li_2$, lithium bis(1,2-benzenediolate(2-)-O,O')borate, lithium bis(2,3-naphthalenediolate(2-)-O,O')borate, lithium bis(2, 2'-biphenyldiolate(2-)-O,O')borate, lithium bis(5-fluoro-2-olate-1-benzenesulfonate-O,O')borate, lithium perchlorate ($LiClO_4$), lithium chloride (LiCl), lithium bromide (LiBr), lithium hydroxide (LiOH), lithium nitrate ($LiNO_3$), lithium sulfate ($Li_2SO_4$), lithium sulfide ($Li_2S$), and lithium hydroxide (LiOH). These lithium salts may be used singly or in combination of two or more kinds thereof.

Examples of the matrix polymer include polyvinylidene fluoride-hexafluoropropylene (PVDF-HFP), polyacrylonitrile (PAN), polyvinyl alcohol (PVA), polytetrafluoroethylene (PTFE), polyethylene oxide (PEO), and polymethyl methacrylate (PMMA). Examples of the matrix polymer may further include polymers obtained by mixing acrylonitrile and acrylic acid as monomers and thermally polymerizing the mixture.

The content of the matrix polymer is, for example, preferably 1 mass% or more and 15.0 mass% or less, and more preferably 3 mass% or more and 10 mass% or less based on the total amount of the aqueous solid electrolyte 16. Within the above range, for example, the aqueous solid electrolyte 16 easily gels or solidifies.

The aqueous solid electrolyte 16 may coat the entire positive electrode 10, or may coat at least the positive electrode mixture layer 28 as shown in FIG. 1. The aqueous solid electrolyte 16 is obtained by, for example, dissolving a lithium salt in an aqueous solvent, further mixing or dissolving a matrix polymer to obtain a precursor solution, applying the precursor solution to the positive electrode 10 or immersing the positive electrode 10 in the precursor solution to coat the positive electrode 10 with the precursor solution, and then drying the resulting product.

The non-aqueous electrolyte 18 having water repellency and including a liquid salt may be a non-aqueous solid electrolyte or a non-aqueous liquid electrolyte. For example, the non-aqueous solid electrolyte is a solid electrolyte in which a lithium salt, an organic solvent, and a matrix polymer are combined, and the non-aqueous liquid electrolyte is a liquid electrolyte in which a lithium salt is dissolved in an organic solvent. In the case of using the non-aqueous solid electrolyte, the entire negative electrode is coated, and therefore from the viewpoint of suppressing water permeation, the non-aqueous solid electrolyte is more preferable. The non-aqueous solid electrolyte is prepared by, for example, dissolving a lithium salt in an organic solvent, further mixing or dissolving a matrix polymer to obtain a precursor solution, and heating and drying the precursor solution.

Examples of the organic solvent include known organic solvents used in conventional non-aqueous secondary batteries, such as esters, ethers, nitriles, alcohols, ketones, amines, amides, sulfur compounds, and hydrocarbons described above. Among these organic solvents, esters, ethers, nitriles, amides, mixed solvents of two or more thereof, and the like are preferably used from the viewpoint of, for example, improving battery characteristics.

Examples of the esters include cyclic carbonic acid esters such as ethylene carbonate, propylene carbonate, and butylene carbonate, chain carbonic acid esters such as dimethyl carbonate, methyl ethyl carbonate, diethyl carbonate, methyl propyl carbonate, ethyl propyl carbonate, and methyl isopropyl carbonate, and carboxylic acid esters such as methyl acetate, ethyl acetate, propyl acetate, methyl propionate, ethyl propionate, and $\gamma$-butyrolactone.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineol, and crown ethers, and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl.

The organic solvent preferably contains a halogen-substituted solvent in which hydrogen in the solvent described above is substituted with a halogen atom such as fluorine. The halogen-substituted solvent is particularly preferably at least one of a fluorinated cyclic carbonic acid ester, a fluorinated chain carbonic acid ester, or a fluorinated ether. Preferred examples of the fluorinated cyclic carbonic acid ester include 4-fluoroethylene carbonate, 4,5-difluoroethylene carbonate, 4,4-difluoroethylene carbonate, 4,4,5-trifluoroethylene carbonate, and 4,4,5,5-tetrafluoroethylene carbonate. Preferred examples of the fluorinated chain carbonic acid ester include ethyl 2,2,2-trifluoroacetate, methyl 3,3,3-trifluoropropionate, and methyl pentafluoropropionate. Preferred examples of the fluorinated ether include 1,1,2,2-tetrafluoroethyl 2,2,2-trifluoroethyl ether and 1,1,2,2-tetrafluoroethyl 2,2,3,3-tetrafluoropropyl ether.

The organic solvent preferably contains a cyclic organic solvent such as a cyclic carbonic acid ester, and more preferably contains 80 vol% or more of a cyclic organic solvent with respect to the total volume of the organic solvent, for example, from the viewpoints of suppressing deterioration of the lithium ion conductivity of the non-aqueous electrolyte 18, and the like.

Examples of the lithium salt include known lithium salts used in conventional non-aqueous secondary batteries, such as $LiPF_6$, $LiBF_4$, $LiAsF_6$, $LiClO_4$, $LiCF_3SO_3$, $LiN(FSO_2)_2$, $LiN(ClF_{21+1}SO_2)(C_mF_{2m+1}SO_2)$ (l and m are integers of 1 or more), $LiC(C_pF_{2p+1}SO_2)(C_qF_{2q+1}SO_2)(C_rF_{2r+1}SO_2)$ (p, q, and r are integers of 1 or more), $Li[B(C_2O_4)_2]$ (lithium bis(oxalate)borate (LiBOB)), $Li[B(C_2O_4)F_2]$, $Li[P(C_2O_4)F_4]$, $Li[P(C_2O_4)_2F_2]$, and $LiPO_2F_2$. The lithium salt may be, for example, the above-exemplified lithium salt to be used in the aqueous solid electrolyte 16.

As the matrix polymer, the same one as in the aqueous solid electrolyte 16 can be used. The content of the matrix polymer is, for example, preferably 1 mass% or more and 15.0 mass% or less, and more preferably 3 mass% or more and 10 mass% or less based on the total amount of the non-aqueous electrolyte 18. Within the above range, for example, the non-aqueous electrolyte 18 easily solidifies.

The non-aqueous electrolyte 18 having water repellency preferably has a solubility of 2 g or less in 100 g of water at 25°C, for example, from the viewpoint of effectively suppressing contact between the negative electrode 12 and water. The water repellency of the non-aqueous electrolyte 18 can be enhanced by, for example, increasing the ratio of the organic solvent having a water-repellent substituent or the fluorinated organic solvent.

Although it is sufficient that only the surface of the negative electrode mixture layer 32 is coated with the non-aqueous electrolyte 18, it is preferable that the entire negative electrode 12 be coated as shown in FIG. 1, and it is more preferable that the negative electrode lead 22 (excluding the portion protruding from the battery case 24) be also coated, because a side reaction of water occurs also on the negative electrode current collector 30 and the negative electrode lead 22. It is preferable that the separator 14 be also coated with the non-aqueous electrolyte 18 as shown in FIG. 1, from the viewpoint of, for example, effectively preventing water from moving toward the negative electrode 12. The non-aqueous electrolyte 18 is obtained by, for example, dissolving a lithium salt in an organic solvent, further mixing or dissolving a matrix polymer to obtain a precursor solution, applying the precursor solution to the negative electrode 12, the separator 14, and the like or immersing an assembly obtained by winding the separator 14 around the negative electrode 12 to which the negative electrode lead 22 is attached in the precursor solution to coat the negative electrode 12 and the like with the precursor solution, and then heating the resulting product.

The separator 14 is not particularly limited as long as it has functions of lithium-ion permeation and electrical separation between the positive electrode 10 and the negative electrode 12, and for example, a porous sheet including a resin, an inorganic material, or the like is used. Specific examples of the porous sheet include fine porous thin films, woven fabrics, and nonwoven fabrics. Examples of a material of the separator 14 include olefin-based resins such as polyethylene and polypropylene, polyamides, polyamideimides, and cellulose. Examples of the inorganic material constituting the separator 14 include glass and ceramics such as borosilicate glass, silica, alumina, and titania. The separator 14 may be a stacked body having a cellulose fiber layer and a thermoplastic resin fiber layer such as an olefin-based resin. The separator 14 may be a multilayer separator 14 including a polyethylene layer and a polypropylene layer, and a separator 14 may be used that has a surface to which a material such as an aramid-based resin or a ceramic is applied.

From the viewpoint of effectively preventing water from moving toward the negative electrode 12 and effectively suppressing a side reaction of water at the negative electrode 12, The separator 14 is preferably wound around the negative electrode 12 and coated together with the negative electrode 12 with the non-aqueous electrolyte 18 having water repellency, but is not limited thereto. For example, the separator 14 may be simply disposed between the positive electrode 10 and the negative electrode 12, or may be coated with the aqueous solid electrolyte 16. Also in such a form, a side reaction of water and deterioration of the initial charge-discharge efficiency can be suppressed.

Examples of the battery case 24 include metal cases, resin cases, and laminate film cases. Examples of a material of the metal cases include nickel, iron, and stainless steel. Examples of a material of the resin cases include polyethylene and polypropylene. The laminate film is, for example, a multilayer film in which a stainless foil is coated with a resin film. Examples of a material of the resin film include polypropylene, polyethylene, nylon, and polyethylene terephthalate.

The lithium ion secondary battery of the present embodiment is used in various forms having a shape such as a square, cylindrical, flat, thin, coin, or laminate shape.

EXAMPLES

Hereinafter, the present disclosure will be further described with reference to Examples, but the present disclosure is not limited to these Examples.

<Example 1>

[Negative Electrode]

Graphite as a negative electrode active material and PVDF as a binder were mixed at a solid-content mass ratio of 96 : 4 in N-methyl-2-pyrrolidone (NMP) to prepare a negative electrode mixture slurry. Next, the negative electrode mixture slurry was applied to a negative electrode current collector made of a copper foil, and the applied film was dried and then rolled with a roller. The resulting product was cut into a predetermined electrode size to obtain a negative electrode. The amount of the applied negative electrode mixture slurry was 32.3 $g/m^2$, and the packing density of the negative electrode mixture layer was 1.0 $gcm^{-3}$.

[Positive Electrode]

Lithium iron phosphate (LFP, composition: $LiFePO_4$) as a positive electrode active material, carbon black as a conductive agent, and PVDF as a binder were mixed at a mass ratio of 94 : 3 : 3 in NMP to prepare a positive electrode mixture slurry. Next, the positive electrode mixture slurry was applied to a positive electrode current collector made of a Ti foil, and the applied film was dried and then rolled with a roller. The resulting product was cut into a predetermined electrode size to obtain a positive electrode. The amount of the applied positive electrode mixture slurry was 65.0 $g/cm^2$, and the packing density of the positive electrode mixture layer was 2.8 $gcm^{-3}$.

[Non-Aqueous Electrolyte Having Water Repellency]

In a mixed solution obtained by mixing fluoroethylene carbonate (FEC) and methyl 3,3,3-trifluoropropionate (FMP) at a volume ratio of 9 : 1, 1 M LITFSI was dissolved to prepare an electrolyte liquid. Next, with respect to the electrolyte liquid, 4 mass% of polymethyl methacrylate (PMMA) and 8 mass% of polyvinylidene fluoride-hexafluoropropylene (PVDF-HFP) were prepared and dissolved in a solvent obtained by mixing tetrahydrofuran (THF) in an amount 10 times that of PMMA and acetone in an amount 10 times that of PMMA. The electrolyte liquid was mixed with the resulting solution to prepare a precursor solution of a non-aqueous electrolyte.

Next, a separator was wound around the negative electrode to which a negative electrode lead was attached to produce an assembly, and the assembly was immersed in the precursor solution of a non-aqueous electrolyte and then dried at 60°C for 1 hour to convert the precursor solution coating the assembly into a non-aqueous solid electrolyte.

[Aqueous Solid Electrolyte]

LITFSI, LIBETI, and water were mixed at a molar ratio of 0.7 : 0.3 : 2.0 and the LITFSI and the LIBETI were dissolved in the water to obtain a solution, and polyvinyl alcohol (PVA) was dissolved at a concentration of 9 mass% in the solution to prepare a precursor solution of an aqueous solid electrolyte.
Next, the surface of the positive electrode mixture layer of the positive electrode to which a positive electrode lead was attached was coated with the precursor solution of an aqueous solid electrolyte, and then the resulting product was dried at room temperature for 10 minutes to convert the precursor solution coating the positive electrode mixture layer into an aqueous solid electrolyte.

[Test Cell]

The assembly coated with the non-aqueous electrolyte and the positive electrode coated with the aqueous solid electrolyte were housed in a battery case as shown in FIG. 1 to produce a test cell.

<Example 2>

A test cell was produced in the same manner as in Example 1 except that a transition metal oxide containing Li, Ni, Co, and Al (NCA, composition: $LiNi_{0.92}Co_{0.05}Al_{0.03}O_2$) was used instead of lithium iron phosphate. The packing density of the positive electrode mixture layer at this time was 40.0 g/m$^2$ and 2.6 gcm$^{-3}$.

<Comparative Example 1>

A test cell was produced in the same manner as in Example 1 except that instead of the aqueous solid electrolyte, an aqueous liquid electrolyte was used that was obtained by mixing LITFSI, LIBETI, and water at a molar ratio of 0.7 : 0.3 : 2.0 and dissolving the LITFSI and the LIBETI in the water, and that a positive electrode was immersed in this aqueous liquid electrolyte and housed in a battery case.

<Comparative Example 2>

The assembly of Example 1 (assembly in which the separator was wound around the negative electrode to which the negative electrode lead was attached), the positive electrode of Example 1 to which the positive electrode lead was attached, and the aqueous liquid electrolyte of Comparative Example 1 were housed in a battery case to produce a test cell.

<Comparative Example 3>

LITFSI, dimethyl carbonate (DMC), fluoroethylene carbonate (FEC), and water were mixed at a molar ratio of 1.0 : 0.2 : 0.2 : 1.5 to prepare an electrolyte liquid. Then, the assembly of Example 1, the positive electrode of Example 1 to which the positive electrode lead was attached, and the aqueous liquid electrolyte of Comparative Example 3 were housed in a battery case to produce a test cell.

<Comparative Example 4>

A test cell was produced in the same manner as in Example 2 except that instead of the aqueous solid electrolyte, an aqueous liquid electrolyte was used that was obtained by mixing LITFSI, LIBETI, and water at a molar ratio of 0.7 : 0.3 : 2.0 and dissolving the LITFSI and the LIBETI in the water, and that a positive electrode was immersed in this aqueous liquid electrolyte and housed in a battery case.
The test cell of each of Examples and Comparative Examples was charged to 3.7 V at 0.2 C and discharged to 2.0 V at 0.2 + 0.05 C, and the initial charge capacity and the initial discharge capacity were measured. In Example 2, the test cell was charged to 4.2 V Then, the initial charge-discharge efficiency (%) was determined using the following formula. Table 1 shows the results.

Initial charge-discharge efficiency (%) = (initial discharge capacity)/(initial charge capacity) × 100

[Table 1]

|  | Positive electrode | | Negative electrode | | Initial charge-discharge efficiency |
|---|---|---|---|---|---|
|  | Active material | Electrolyte | Active material | Electrolyte |  |
| Example 1 | LFP | Aqueous solid electrolyte | Graphite | Non-aqueous solid electrolyte | 85% |
| Example 2 | NCA | Aqueous solid electrolyte | Graphite | Non-aqueous solid electrolyte | 64% |
| Comparative Example 1 | LFP | Aqueous liquid electrolyte | Graphite | Non-aqueous solid electrolyte | 9% |
| Comparative Example 2 | LFP | Aqueous liquid electrolyte | Graphite | Aqueous liquid electrolyte | 0% |
| Comparative Example 3 | LFP | Aqueous liquid electrolyte (Including organic solvent) | Graphite | Aqueous liquid electrolyte (Including organic solvent) | 7% |
| Comparative Example 4 | NCA | Aqueous liquid electrolyte | Graphite | Non-aqueous solid electrolyte | 0% |

In Examples 1 and 2, the initial charge-discharge efficiency was higher than in Comparative Examples 1 to 3. This is considered to be because coating with the non-aqueous electrolyte prevented contact between water and the charged negative electrode and thus reductive decomposition (a side reaction) of water did not proceed. From this result, it can be said that the initial charge-discharge efficiency can be improved by using the lithium ion secondary battery in which the aqueous solid electrolyte is in contact with only the positive electrode between the negative electrode and the positive electrode, and the non-aqueous electrolyte is in contact with at least the negative electrode between the negative electrode and the positive electrode.

REFERENCE SIGNS LIST

1    Lithium ion secondary battery
10    Positive electrode
12    Negative electrode
14    Separator
16    Aqueous solid electrolyte
18    Non-aqueous electrolyte
20    Positive electrode lead
22    Negative electrode lead
24    Battery case
26    Positive electrode current collector
28    Positive electrode mixture layer
30    Negative electrode current collector
32    Negative electrode mixture layer

Claims

1.    A lithium ion secondary battery comprising:

a negative electrode;

a positive electrode;

a non-aqueous electrolyte including a lithium salt and having water repellency; and

an aqueous solid electrolyte including a lithium salt, wherein

the aqueous solid electrolyte is in contact with only the positive electrode between the negative electrode and the positive electrode, and

the non-aqueous electrolyte is in contact with at least the negative electrode between the negative electrode and the positive electrode.

2. The lithium ion secondary battery according to claim 1, wherein the aqueous solid electrolyte includes the lithium salt, a solvent containing water, and a matrix polymer.

3. The lithium ion secondary battery according to claim 1 or 2, wherein the non-aqueous electrolyte is a non-aqueous solid electrolyte.

4. The lithium ion secondary battery according to claim 3, wherein the non-aqueous solid electrolyte includes the lithium salt, an organic solvent, and a matrix polymer.

5. The lithium ion secondary battery according to claim 4, wherein

the organic solvent contains a cyclic organic solvent, and

the organic solvent contains 80 vol% or more of the cyclic organic solvent based on a total volume of the organic solvent.

6. The lithium ion secondary battery according to any one of claims 1 to 5, wherein the positive electrode includes a positive electrode active material containing a lithium-containing transition metal oxide, and the lithium-containing transition metal oxide contains at least one element of Ni, Co, Mn, or Al.

7. The lithium ion secondary battery according to claim 6, wherein the lithium-containing transition metal oxide contains elements including a Ni element, a Co element, two elements of Ni and Mn, three elements of Ni, Co, and Mn, or three elements of Ni, Co, and Al.

8. The lithium ion secondary battery according to any one of claims 1 to 7, wherein the negative electrode includes a negative electrode active material containing a carbon material.

# Figure 1

**EP 4 191 731 A1**

## INTERNATIONAL SEARCH REPORT

| | International application No. |
|---|---|
| | PCT/JP2021/022506 |

| A. CLASSIFICATION OF SUBJECT MATTER |
|---|
| Int. Cl. H01M10/36(2010.01)i, H01M4/505(2010.01)i, H01M4/525(2010.01)i, H01M4/587(2010.01)i<br>FI: H01M10/36 A, H01M4/505, H01M4/525, H01M4/587<br>According to International Patent Classification (IPC) or to both national classification and IPC |

| B. FIELDS SEARCHED |
|---|
| Minimum documentation searched (classification system followed by classification symbols)<br>Int. Cl. H01M10/36, H01M4/505, H01M4/525, H01M4/587 |
| Documentation searched other than minimum documentation to the extent that such documents are included in the fields searched<br>Published examined utility model applications of Japan    1922-1996<br>Published unexamined utility model applications of Japan    1971-2021<br>Registered utility model specifications of Japan    1996-2021<br>Published registered utility model applications of Japan    1994-2021 |
| Electronic data base consulted during the international search (name of data base and, where practicable, search terms used) |

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2019-200868 A (MAXELL HOLDINGS LTD.) 21 November 2019 (2019-11-21) | 1-8 |
| A | WO 2005/112180 A1 (MATSUSHITA ELECTRIC INDUSTRIAL CO., LTD.) 24 November 2005 (2005-11-24) | 1-8 |
| A | WO 2011/089710 A1 (TOYOTA MOTOR CORP.) 28 July 2011 (2011-07-28) | 1-8 |
| A | WO 2013/094689 A1 (NISSAN CHEMICAL INDUSTRIES, LTD.) 27 June 2013 (2013-06-27) | 1-8 |
| A | JP 2018-22655 A (SUZUKI MOTOR CORP.) 08 February 2018 (2018-02-08) | 1-8 |

☒ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06.07.2021 | 20.07.2021 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

13

**INTERNATIONAL SEARCH REPORT**

| International application No. |
| --- |
| PCT/JP2021/022506 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2003-157899 A (JAPAN STORAGE BATTERY CO., LTD.) 30 May 2003 (2003-05-30) | 1-8 |
| A | JP 2012-33490 A (SAMSUNG ELECTRONICS CO., LTD.) 16 February 2012 (2012-02-16) | 1-8 |
| A | CN 103904290 A (HUAWEI TECHNOLOGIES CO., LTD.) 02 July 2014 (2014-07-02) | 1-8 |

Form PCT/ISA/210 (continuation of second sheet) (January 2015)

Form PCT/ISA/210 (patent family annex) (January 2015)

**INTERNATIONAL SEARCH REPORT**

Information on patent family members

| International application No. |
|---|
| PCT/JP2021/022506 |

| Patent Documents referred to in the Report | Publication Date | Patent Family | Publication Date |
|---|---|---|---|
| JP 2019-200868 A | 21.11.2019 | (Family: none) | |
| WO 2005/112180 A1 | 24.11.2005 | US 2008/0274411 A1<br>KR 10-2007-0011443 A<br>CN 1950968 A | |
| WO 2011/089710 A1 | 28.07.2011 | US 2012/0276457 A1<br>EP 2518795 A1<br>KR 10-2011-0100185 A<br>CN 102292849 A<br>AU 2010271483 A1 | |
| WO 2013/094689 A1 | 27.06.2013 | (Family: none) | |
| JP 2018-22655 A | 08.02.2018 | (Family: none) | |
| JP 2003-157899 A | 30.05.2003 | (Family: none) | |
| JP 2012-33490 A | 16.02.2012 | US 2012/0028164 A1<br>KR 10-2012-0011322 A | |
| CN 103904290 A | 02.07.2014 | (Family: none) | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6423453 B

- JP 2018198131 A